# EUROPÄISCHE PATENTANMELDUNG

(11) **EP 2 397 822 A2**
(43) Veröffentlichungstag der Anmeldung: **21.12.2011**
(21) Anmeldenummer: 11170192.6
(22) Anmeldetag: 16.06.2011
(51) Int. Cl.: G01D 11/24

(54) **Mobiles Messgerät**

(30) Priorität: 21.06.2010 AT 3882010 U
(71) Anmelder: AVL List GmbH, 8020 Graz (AT)
(72) Erfinder: Schimpl, Thomas, 8430 Leibnitz (AT); Dorfner, Martin, 8200 Gleisdorf (AT); Pointner, Volker, 8010 Graz (AT)
(74) Vertreter: Laminger, Norbert

(57) **Zusammenfassung**

Ein mobiles Messgerät, insbesondere für die temporäre Verwendung in oder auf Fahrzeugen an Standmotoren oder an Prüfständen, besteht aus in einem gemeinsamen Gehäuse (1) angeordneten Einzelkomponenten (2) mit allenfalls unterschiedlicher Arbeitstemperatur. Weiters ist zumindest ein Ventilator (6) vorgesehen.

Um bei möglichst kleinem und leichtem Aufbau zur Gewährleistung einfachen Transports und hoher Mobilität einen betreffend des Außen-Temperaturbereichs sehr weiten Einsatzbereich und innerhalb dieses Bereiches zuverlässige Messung zu ermöglichen, ist das Gehäuse (1) im wesentlichen gasdicht ausgeführt.

Weiters sind durch Luftleitbleche (3) voneinander getrennte Abteile für die Einzelkomponenten (2) und eine sich über eine gesamte Gehäuseseite erstreckende Konditionierlade (4) vorgesehen, welche mit dem einzigen Lufteinlass (5) versehen ist und in welcher mindestens ein Ventilator (6) vorrangig mit variablem Durchfluss, mindestens ein Konditionierblock (7) und mindestens ein Temperaturfühler (8) angeordnet ist.

Auslässe (9) mit definierten Querschnitten führen von der Konditionierlade (4) zu zumindest einigen Abteilen für die Einzelkomponenten (2), und der Konditionierblock (7), der Ventilator (6) und der Temperaturfühler (8) sind mit einem im Messgerät integrierten Steuersystem verbunden, das den Konditionierblock (7) und den Ventilator (6) entsprechend der gewünschten Arbeitstemperatur der Einzelkomponenten (2) ansteuert.

## Beschreibung

Die Erfindung betrifft ein mobiles Messgerät, insbesondere für die Verwendung in Fahrzeugen oder an Prüfständen, mit in einem gemeinsamen Gehäuse angeordneten Einzelkomponenten mit allenfalls unterschiedlicher Arbeitstemperatur, sowie mit zumindest einem Ventilator.

Bei herkömmlichen Messgeräten ist der Einsatzbereich in Bezug auf die Umgebungstemperatur sehr eingeschränkt und liegt zwischen +5 und max. +45°C.

Die Aufgabe der vorliegenden Erfindung war ein Messaufbau oder Messgerät, der bzw. das bei möglichst kleinem und leichtem Aufbau zur Gewährleistung einfachen Transports und hoher Mobilität einen betreffend des Außen-Temperaturbereichs sehr weiten Einsatzbereich hat und innerhalb dieses Bereiches zuverlässige Messungen erlaubt.

Zur Lösung dieser Aufgabe ist das Messgerät erfindungsgemäß dadurch gekennzeichnet, dass das Gehäuse im Wesentlichen gasdicht ausgeführt ist, durch Luftleitbleche voneinander getrennte Abteile für die Einzelkomponenten aufweist, und eine sich über eine gesamte Gehäuseseite erstreckende Konditionierlade aufweist, welche Konditionierlade mit dem einzigen Lufteinlass versehen ist und in welcher mindestens ein Ventilator vorzugsweise mit variablem, einstellbaren Durchfluss, mindestens ein Konditionierblock und mindestens ein Temperaturfühler angeordnet sind, wobei Auslässe mit manuell einstellbarem Querschnitt von der Konditionierlade zu zumindest einigen Abteilen für die Einzelkomponenten führen, und wobei der Konditionierblock, der Ventilator und der Temperaturfühler mit einem im Messgerät integrierten Steuersystem verbunden sind, das den Konditionierblock und den Ventilator entsprechend der gewünschten Arbeitstemperatur der Einzelkomponenten ansteuert. Damit sind auch Kalttests im Rahmen der Fahrzeugabstimmung ohne Beeinträchtigung der Zuverlässigkeit der Messungen möglich. Über die vorzugsweise manuell einstellbaren Lufteinlass- und Luftauslassquerschnitte kann schon in der Rüstphase das Messgerät auf den vorgesehenen Einsatztemperaturbereich vorbereitet werden.

Gemäß einer vorteilhaften Ausführungsform der Erfindung ist ein einziger Luftauslass aus dem Gehäuse vorgesehen.

Vorzugsweise ist dabei der Luftauslass mit einem Ventilator mit variablem Durchsatz versehen, welcher Ventilator mit dem im Messgerät integrierten Steuersystem verbunden ist und entsprechend der gewünschten Arbeitstemperatur der Einzelkomponenten bzw. des Messgerätes angesteuert wird.

Wenn gemäß einer weiteren erfindungsgemäßen Ausführung des Messaufbaues und /oder des Messgerätes der Querschnitt von Lufteinlass und/oder Luftauslass vorzugsweise manuell, allenfalls auch automatisch über das Steuersystem einstellbar ist, kann noch genauer der vorgesehene Einsatztemperaturbereich berücksichtigt werden.

Um den optimalen Temperaturbereich von im Messgerät vorhandenen Einzelkomponenten noch besser berücksichtigen zu können, sieht eine weitere vorteilhafte Ausführungsform der Erfindung vor, dass zumindest einige der Einzelkomponenten mit einem Temperatursensor versehen sind, welcher mit dem im Messgerät integrierten Steuersystem verbunden ist, und dass ein Ventilator in einem Auslass von der Konditionierlade zum Abteil der Einzelkomponente eingesetzt ist, welcher Ventilator mit dem im Messgerät integrierten Steuersystem verbunden ist und entsprechend der gewünschten Arbeitstemperatur der Einzelkomponenten angesteuert wird.

Gemäß einem weiteren optionalen Merkmal der Erfindung ist vorgesehen, dass zumindest einige der Einzelkomponenten mit einem Temperatursensor versehen sind, welcher mit dem im Messgerät integrierten Steuersystem verbunden ist, und dass die Einzelkomponenten mit einem zusätzlichen Konditionierblock versehen sind, welcher ebenfalls mit dem im Messgerät integrierten Steuersystem verbunden ist und entsprechend der gewünschten Arbeitstemperatur der Einzelkomponenten bzw. des Messgerätes angesteuert wird.

Wenn der Lufteinlass zum Anschluss einer Leitung für konditionierte Luft ausgelegt ist, kann eine externe Quelle für konditionierte Luft, vorzugsweise aus der Klimaanlage des Fahrzeuges, angeschlossen und für die Konditionierung des Messgerätes genutzt werden.

Um die Beschädigung einzelner temperaturempfindlicher Komponenten zu vermeiden bzw. Messfehler zu minimieren, kann weiters im Steuersystem ein Ablauf implementiert sein, gemäß dem eine vorgebbare Mindest- und/oder Maximaltemperatur für zumindest eine der Einzelkomponenten überwacht und diese erst eingeschaltet oder ausgeschaltet wird, wenn die Mindesttemperatur erreicht und/oder überschritten ist bzw. die Maximaltemperatur nicht überschritten ist.

Alternativ dazu könnte auch vorgesehen sein, dass im Steuersystem ein Ablauf integriert ist, gemäß dem bis zum Erreichen bzw. Überschreiten einer Mindesttemperatur bzw. nach Überschreiten der Maximaltemperatur nur die Konditioniereinheit und der zumindest eine Ventilator in der Konditionierlade in Betrieb genommen werden können.

Besonders vorteilhaft ist auch eine Variante der Erfindung, gemäß welcher im Steuersystem ein Ablauf für temperaturkritische Komponenten integriert ist, gemäß dem durch gleitendes oder stufiges Erhöhen oder Absenken der Ventilatorendurchsätze Temperaturänderungen gedämpft werden.

In der nachfolgenden Beschreibung soll die Erfindung anhand von bevorzugten Ausführungsbeispielen näher erläutert werden.

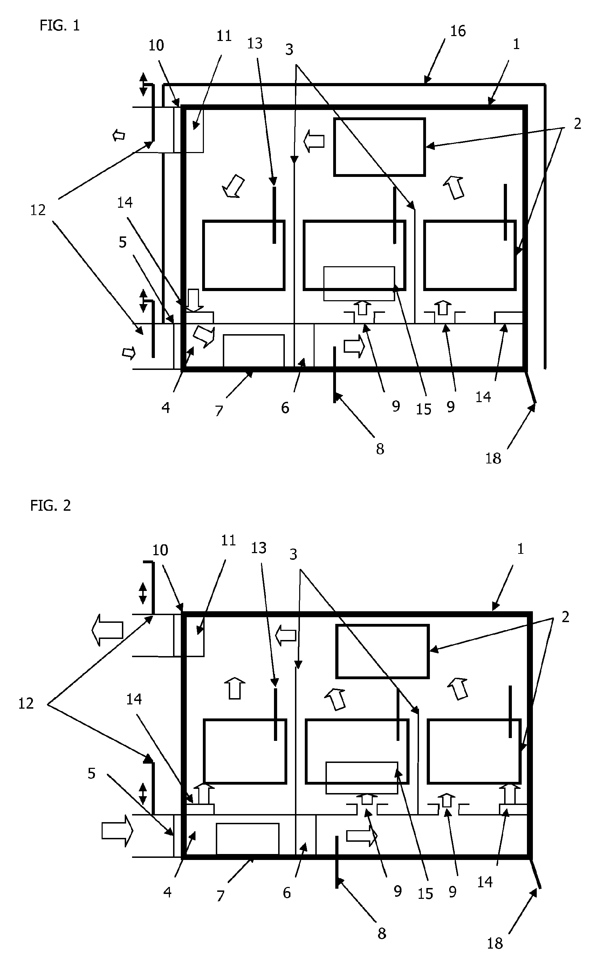

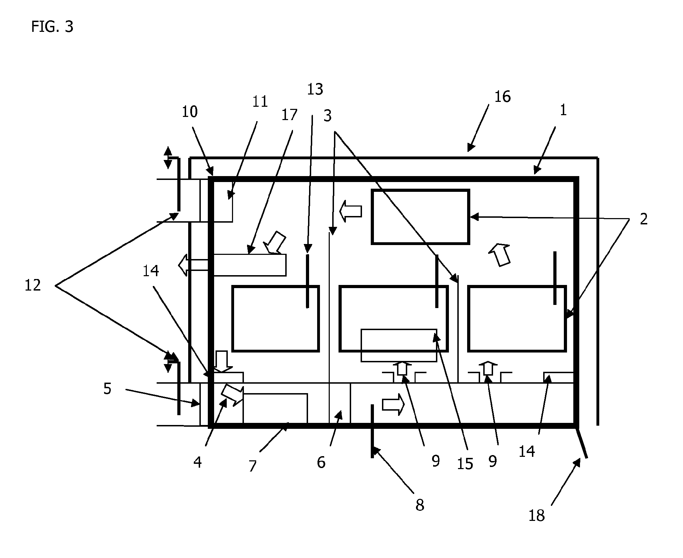

Dabei zeigt die Fig. 1 eine erste Ausführungsform eines erfindungsgemäßen Messgerätes in schematischer Darstellung, in einer Konfiguration für sehr niedrige Umgebungstemperaturen , Fig. 2 stellt das Messgerät der Fig. 1 in einer Konfiguration für etwas höhere Umgebungstemperaturen dar, und Fig. 3 zeigt eine alternative Ausführungsform für den Einsatz bei sehr hohen Umgebungstemperaturen.

Das erfindungsgemäße Messgerät der Fig. 1 weist in einem im Wesentlichen gasdicht ausgeführten Gehäuse 1 mehrere Einzelkomponenten 2 auf, die typischerweise unterschiedlicher Arbeitstemperaturen haben. Die Einzelkomponenten 2 sind vorzugsweise in durch Luftleitbleche 3 voneinander getrennten Abteilen angeordnet, wodurch deren individuelle Kühlung oder Beheizung erleichtert ist.

Vorzugsweise als Boden des Messgerätes ist eine sich über die gesamte Bodenfläche erstreckende Konditionierlade 4 vorgesehen, die mit dem einzigen Lufteinlass 5 im Gehäuse 1 ausgestattet ist. Weiters ist in der Konditionierlade 4 mindestens ein Ventilator 6 mit variablem Durchfluss angeordnet, der für die Umwälzung der mittels mindestens eines ebenfalls in der Konditionierlade 4 angeordneten Konditionierblocks 7 sorgt. Je nach Anwendungszweck und Umgebungstemperatur kann der Konditionierblock 7 eine Heiz- und/oder Kühleinrichtung enthalten oder als solche ausgeführt sein. Die Ansteuerung des Konditionierblocks 7 erfolgt über ein in das Messgerät integriertes Steuersystem, mit welchem auch mindestens ein in der Konditionierlade 4 vorgesehener Temperaturfühler 8 verbunden ist.

Von der Konditionierlade 4 ausgehend führen, für die umgewälzte und/oder konditionierte Luft, Auslässe 9 zu den einzelnen Komponenten 2 bzw. in die von den Luftleitblechen 3 definierten Abteile. Um die Luftzufuhr zu den Einzelkomponenten 2 in Abhängigkeit von der zu erwartenden Umgebungstemperatur auf deren Arbeitstemperatur abstimmen zu können, sind die Auslässe 9 mit einstellbarem Querschnitt ausgeführt. Die Anordnung und die Querschnitte dieser Auslässe werden im Zuge der Entwicklung definiert. Für alle vorgesehenen Einzelkomponenten 2 mit bestimmtem Kühlluftbedarf werden Anordnung und Querschnitt der Auslässe 9 einmal ermittelt. Wenn weitere, neue oder alternative Komponenten mit anderem Kühlluftbedarf integriert werden sollen, dann sind diese Auslässe 9 neu zu definieren. Prinzipiell sind nach Abschluss der Entwicklung für den Typ von Gerät diese Auslässe 9 dann für alle darin verwendbaren Einzelkomponenten 2 festgelegt. Allenfalls könnte aber auch eine Ausführung der Auslässe 9 vorgesehen sein, deren Querschnitt auch noch während des Messbetriebs durch das Steuersystem automatisch verändert werden kann.

Zusätzlich zu den Auslässen 9 können auch weitere Leiteinrichtungen wie Schächte od. dgl. für die konditionierte Luft vorgesehen sein, insbesondere in der Konditionierlade 4 ferner liegende Bereiche des Gehäuses 1, beispielsweise in eine zweite oder weitere Ebene von Einzelkomponenten 2.

Zur Abfuhr von Luft und Feuchtigkeit aus dem Gehäuse 1 ist ein einziger Luftauslass 10 vorgesehen, der vorzugsweise mit einem Ventilator 11 mit variablem Durchsatz versehen ist. Auch dieser Ventilator 11 ist mit dem im Messgerät integrierten Steuersystem verbunden und kann daher entsprechend der gewünschten Arbeitstemperatur der Einzelkomponenten 2 bzw. des Messgerätes insgesamt angesteuert werden. Unabhängig von den Ventilatoren 6 bzw. 11 kann der Querschnitt von Lufteinlass 5 und/oder Luftauslass 10 vorzugsweise manuell in der Rüstphase, allenfalls auch noch automatisch während des Messbetriebes, über das Steuersystem eingestellt werden. Dazu sind beispielsweise verstellbare Schieber 12 vorgesehen. Die verstellbaren Schieber 12 oder auch andere Einrichtungen zur Querschnittreduktion können auch in der externen Hülle 16 oder dem externen Gehäuse 16 angeordnet sein.

Zumindest einige der Einzelkomponenten 2 können mit eigenen Temperatursensoren 13 versehen sein, welche vorteilhafterweise ebenfalls mit dem im Messgerät integrierten Steuersystem verbunden sind, so dass die optimalen Temperaturbereiche der Einzelkomponenten 2 noch besser berücksichtigen werden können. Dies kann etwa dadurch erfolgen, dass ein weiterer Ventilator 14 in einem Auslass 9 von der Konditionierlade 4 zum Abteil der Einzelkomponente 2 eingesetzt ist, der über das Steuersystem entsprechend der gewünschten Arbeitstemperatur der Einzelkomponenten angesteuert wird. Einzelkomponenten 2 können aber auch mit einem zusätzlichen, eigenen Konditionierblock 15 ausgestattet sein, wenn es deren Temperaturempfindlichkeit erfordert. Das Steuersystem des Messgerätes steuert dann in Abhängigkeit vom Signal der allfälligen Temperatursensoren 13 der Einzelkomponenten 2 vorzugsweise sowohl den zusätzlichen Konditionierblock 15 der Einzelkomponente 2 als auch die übrigen Einrichtungen zur Konditionierung der Luft im Messgerät an.

Der Lufteinlass 5 kann zum Anschluss einer Leitung für konditionierte Luft ausgelegt sein, über die eine externe Quelle für konditionierte Luft, vorzugsweise aus der Klimaanlage des Fahrzeuges, d.h. aus dem Fahrgastraum oder der Kabine, angeschlossen werden kann.

Das Steuersystem enthält vorzugsweise zumindest einen vorgegebenen Ablauf, bei dem eine vorgebbare Mindest- und/oder Maximaltemperatur für zumindest eine der Einzelkomponenten 2 überwacht wird. Erst wenn die Mindesttemperatur erreicht und/oder überschritten ist bzw. die Maximaltemperatur nicht überschritten ist, wird diese Einzelkomponente 2 eingeschaltet.

Alternativ könnte auch bis zum Erreichen bzw. Überschreiten einer Mindesttemperatur bzw. nach Überschreiten der Maximaltemperatur nur die Konditioniereinheit 7 und der zumindest eine Ventilator 6 in der Konditionierlade 4 in Betrieb genommen werden.

Besonders vorteilhaft ist auch eine Variante der Erfindung, gemäß welcher im Steuersystem ein Ablauf für temperaturkritische Komponenten 2 integriert ist, gemäß dem durch gleitendes oder stufiges Erhöhen oder Absenken der Ventilatorendurchsätze Temperaturänderungen im Bereich der Einzelkomponenten 2 reduziert werden.

Für Betrieb des Messgerätes der Fig. 1 bei besonders niedrigen Temperaturen von beispielsweise - 30 bis +5°C wird vorzugsweise manuell, allenfalls auch automatisch über das Steuersystem, der freie Querschnitt von Lufteinlass 5 und Luftauslass 10 abhängig von der zu erwartenden Umgebungstemperatur reduziert. Dies ist durch die kleinen Pfeile bei Lufteinlass 5 und Luftauslass 10 symbolisiert. Mit der dadurch entstehenden Umluftfunktion wird der Energiebedarf des Messgerätes verringert und das Aufwärmen beschleunigt. Der noch verbleibende freie Zu- und Abluftquerschnitt sorgt für notwendigen Luftaustausch zur Reduzierung der internen Luftfeuchte. Allenfalls kann das schnelle Messgerätaufwärmen durch eine optional beheizbare Isolierhaube 16 oder ein externes Gehäuse 16 beschleunigt werden.

Während zuerst beim Aufwärmen und Enteisen nur der Ventilator 6 der Konditionierlade 4 in Betrieb ist, werden die Einzelkomponenten 2 eingeschaltet, sobald garantiert ist, dass diese eisfrei und auf Betriebstemperatur sind. Ab diesem Zeitpunkt liefert die Abwärme der eingeschalteten Komponenten 2 einen zusätzlichen Wärmeeintrag. Der Konditionierblock 7 und allfällige zusätzliche Einzelkomponenten-Konditionierblöcke 15, deren Temperturen über Temperatursensor 8 und 13 ermittelt werden, sind bis zum Erreichen einer vorgebbaren Temperaturgrenze, in Betrieb,.

Beim Betrieb des Messgerätes im Temperaturbereich zwischen 20 und 45°C sind die Querschnitte von Lufteinlass 5 und Luftauslass 10 ganz offen - symbolisiert in Fig. 2 durch die dicken Pfeile bei Lufteinlass 5 und Luftauslass 10 - und die Frischluftdurchsatzmenge wird allein durch die verbauten Ventilatoren bestimmt, d.h. die Umluftfunktion ist damit reduziert oder auch gänzlich außer Betrieb. Eine allfällige Isolierhaube 16 kann abgenommen bzw. von Beginn an weggelassen werden, da die Ventilatorendurchsätze, abhängig von gemessen Komponenten-Temperaturen, für gezielte Kühlung sorgen. Ab einer vorgebbaren Temperatur am Temperaturfühler 8 wird der Konditionierblock 7 bzw. dessen Heizeinrichtung abgeschaltet. Die Abwärme aller Komponenten 2 gemeinsam mit den entsprechenden Kühlluftmengen sorgt für geeignete Temperierung im Gerät. Wenn allerdings die vorgebbare Temperatur am Temperaturfühler 8 unterschritten wird, wird auch der Konditionierblock 7 wieder aktiv. Bei komponentenspezifischen Temperaturgrenzwertüber- oder Unterschreitungen wird bedarfsgerecht die Luftdurchsatzmenge über die Ansteuerung der Ventilatoren erhöht oder reduziert. Bei niedrigen Umgebungstemperaturen kann allenfalls auch eine automatische, über das Steuersystem bewirkte Verringerung des Querschnittes des Lufteinlasses 5 und/oder Luftauslasses 10 auch während des Messbetriebes vorgesehen sein. Damit wird eine Erhöhung der Umluftmenge mit den bereits beschriebenen Vorteilen erreicht.

Für Messaufgaben bei besonders hohen Umgebungstemperaturen bei Temperaturen typischerweise höher 40°C kann, wie in Fig. 3 dargestellt ist, neben der vorzugsweise wieder zum Einsatz kommenden Isolierhaube, bzw. des externen Gehäuses 16 und einem als Kühleinrichtung arbeitenden Konditionierblock 7 allenfalls zumindest ein weiterer Kühlblock 17 im Gehäuse angeordnet sein. Dieser Kühlblock 17 kann während der Rüstphase beispielsweise in ein Messgerät der Fig. 1 oder 2 eingebaut werden.

Der freie Querschnitt der von Lufteinlass 5 und Luftauslass 10 wird wieder manuell, allenfalls auch automatisch über das Steuersystem, vorzugsweise in der Rüstphase abhängig von der zu erwartenden Umgebungstemperatur und/oder der zur Verfügung stehenden Kaltluftmenge aus externen Quellen angepasst.

Bei Anschluss eines externen Klimagerätes oder Entnahme der zugeführten Luft aus einem gekühlten Bereich des Fahrzeuges sind die Querschnitte je nach Bedarf auch teilweise geschlossen. Mit der dadurch entstehenden Umluftfunktion wird der Energiebedarf verringert und das Abkühlen beschleunigt.

Beim Abkühlen ist vorrangig nur der oder jeder Ventilator 6 in der Konditionierlade 4 in Betrieb, um die Umluftfunktion zu garantieren.

Die Konditionierblöcke 7 und 15 bzw. der zusätzlichen Kühlblock 17 sind vorzugsweise ebenfalls an das Steuersystem des Messgerätes angeschlossen, arbeiten beim Kühlen bis zum Erreichen oder Unterschreiten der vom Temperatursensor 8 und 13 ermittelten jeweiligen Temperaturgrenze und werden wieder in Betrieb genommen, sobald definierter Temperaturgrenzen überschritten werden.

Über einen Drainagen-Anschluss 18 kann das entstehende Kondenswasser abgeleitet werden.

Bei Außentemperaturänderungen wie diese z.B. bei einer Tunnelfahrt, bei wetterbedingten Temperaturänderungen oder bei Berg- und Talfahrt auftreten können, sorgen geregelte Ventilatordurchsatzmengen gemeinsam mit der u.U. notwendigen Zuheizung/Zukühlung mittels Heizer / Kühler für sehr langsame und geringe Komponentenumgebungs-Temperaturänderungen und damit für einen stabilen Messbetrieb.

Damit die bereits durch die obigen Maßnahmen reduzierten Temperaturänderungen nicht direkt Einzelkomponenten 2 beeinflussen können, werden diese isoliert und/oder in einem Gehäuse mit einer eigener Klimaregelung ausgestattet. Dieses "Einzelkomponenten-Kleinklima" reduziert zusätzlich die durch Kühlluftströmung verursachten Temperaturschwankungen.

## Patentansprüche

1. Mobiles Messgerät, insbesondere für die temporäre Verwendung in Fahrzeugen, an Standmotoren oder an Prüfständen, mit in einem gemeinsamen Gehäuse (1) angeordneten Einzelkomponenten (2) mit allenfalls unterschiedlicher Arbeitstemperatur, sowie mit zumindest einem Ventilator (6), **dadurch gekennzeichnet, dass** das Gehäuse (1) im wesentlichen gasdicht ausgeführt ist, durch Luftleitbleche (3) voneinander getrennte Abteile für die Einzelkomponenten (2) aufweist, und eine sich über eine gesamte Gehäuseseite erstreckende Konditionierlade (4) aufweist, welche Konditionierlade (4) mit dem einzigen Lufteinlass (5) versehen ist und in welcher mindestens ein Ventilator (6) vorzugsweise mit variablem Durchfluss, mindestens ein Konditionierblock (7) und mindestens ein Temperaturfühler (8) angeordnet sind, wobei Auslässe (9) mit manuell einstellbaren oder automatisch vom Steuersystem geregelten Querschnitt von der Konditionierlade (4) zu zumindest einigen Abteilen für die Einzelkomponenten (2) führen, und wobei der Konditionierblock (7), der Ventilator (6) und der Temperaturfühler (8) mit einem im Messgerät integrierten Steuersystem verbunden sind, das den Konditionierblock (7) und den Ventilator (6) entsprechend der gewünschten Arbeitstemperatur der Einzelkomponenten (2) ansteuert.

2. Messgerät nach Anspruch 1, **dadurch gekennzeichnet, dass** ein einziger Luftauslass (10) aus dem Gehäuse (1) vorgesehen ist.

3. Messgerät nach Anspruch 2, **dadurch gekennzeichnet, dass** der Luftauslass (10) mit einem Ventilator (11) vorzugsweise mit variablem Durchsatz versehen ist, welcher Ventilator (11) mit dem im Messgerät integrierten Steuersystem verbunden ist und entsprechend der gewünschten Arbeitstemperatur der Einzelkomponenten (2) bzw. des Messgerätes angesteuert wird.

4. Messgerät nach einem der Ansprüche 1 bis 3, **dadurch gekennzeichnet, dass** der Querschnitt von Lufteinlass (5) und/oder Luftauslass (10) vorzugsweise manuell, allenfalls auch automatisch über das Steuersystem, einstellbar ist.

5. Messgerät nach einem der Ansprüche 1 bis 4, **dadurch gekennzeichnet, dass** zumindest einige der Einzelkomponenten (2) mit einem Temperatursensor (13) versehen sind, welcher mit dem im Messgerät integrierten Steuersystem verbunden ist, und dass ein Ventilator (14) in einem Auslass (9) von der Konditionierlade (4) zum Abteil der Einzelkomponente (2) eingesetzt ist, welcher r (14) mit dem im Messgerät integrierten Steuersystem verbunden ist und entsprechend der gewünschten Arbeitstemperatur der Einzelkomponenten (2) angesteuert wird.

6. Messgerät nach einem der Ansprüche 1 bis 5, **dadurch gekennzeichnet, dass** zumindest einige der Einzelkomponenten (2) mit einem Temperatursensor (13) versehen sind, welcher mit dem im Messgerät integrierten Steuersystem verbunden ist, und dass zumindest eine der Einzelkomponenten (2) mit einem zusätzlichen Konditionierblock (15) versehen ist, welcher ebenfalls mit dem im Messgerät integrierten Steuersystem verbunden ist und entsprechend der gewünschten Arbeitstemperatur der Einzelkomponenten (2) bzw. des Messgerätes angesteuert wird.

7. Messgerät nach einem der Ansprüche 1 bis 6, **dadurch gekennzeichnet, dass** der Lufteinlass (5) zum Anschluss einer Leitung für konditionierte Luft ausgelegt ist.

8. Messgerät nach einem der Ansprüche 1 bis 7, **dadurch gekennzeichnet, dass** im Steuersystem ein Ablauf implementiert ist, gemäß dem eine vorgebbare Mindest- und/oder Maximaltemperatur für zumindest eine der Einzelkomponenten (2) überwacht und diese erst eingeschaltet oder ausgeschaltet wird, wenn die Mindesttemperatur erreicht und/oder überschritten ist bzw. die Maximaltemperatur nicht überschritten ist.

9. Messgerät nach einem der Ansprüche 1 bis 8, **dadurch gekennzeichnet, dass** im Steuersystem ein Ablauf integriert ist, gemäß dem bis zum Erreichen bzw. Überschreiten einer Mindesttemperatur bzw. nach Überschreiten der Maximaltemperatur nur die Konditioniereinheit (7) und der zumindest eine Ventilator (6) in der Konditionierlade (4) in Betrieb genommen werden können.

10. Messgerät nach einem der Ansprüche 1 bis 9, **dadurch gekennzeichnet, dass** im Steuersystem ein Ablauf für temperaturkritische Komponenten (2) integriert ist, gemäß dem durch gleitendes oder stufiges Erhöhen oder Absenken der Ventilatorendurchsätze Temperaturänderungen reduziert werden.
